# DEMANDE DE BREVET EUROPEEN

(11) **EP 4 729 350 A1**
(43) Date de publication de la demande: **22.04.2026**
(21) Numéro de dépôt: 25206904.2
(22) Date de dépôt: 06.10.2025
(51) Int. Cl.: B60N 2/00, B60N 2/02

(54) **PROCÉDÉ DE DÉTERMINATION D'UNE MASSE D'UNE PERSONNE SUR UN SIÈGE DE VÉHICULE**

(30) Priorité: 16.10.2024 FR 2411202
(71) Demandeur: Faurecia Sièges d'Automobile, 92000 Nanterre (FR)
(72) Inventeur: FERRE, Ludovic, 61100 FLERS (FR); MONAT, Julien, 14700 SAINT-PIERRE-DU-BÛ (FR); THOMMEREL, Adrien, 61430 ATHIS-DE-L'ORNE (FR)
(74) Mandataire: Plasseraud IP

(57) **Abrégé**

L'invention concerne un procédé de détermination de la masse d'une personne ou d'un objet positionné sur un siège de véhicule, le procédé comprenant :
- une transmission (28) d'une première commande de déplacement du siège,
- une première détermination (30) de valeurs du courant consommé au cours du déplacement,
- une transmission (36) d'une deuxième commande de déplacement du siège, la personne ou l'objet étant positionné sur le siège,
- une deuxième détermination (38) de valeurs du courant consommé,
- un calcul d'un rapport (42) entre une première donnée représentative des valeurs de courant déterminées lors de la première détermination, et une deuxième donnée représentative des valeurs de courant déterminées lors de la deuxième détermination,
- une détermination (44) de la masse de l'occupant ou de l'objet à partir du rapport calculé et d'une cartographie.

## Description

### Domaine technique de l'invention

L'invention est relative au domaine technique des véhicules. En particulier, l'invention peut être utilisé pour le préréglage d'équipement de confort d'un véhicule en fonction de la morphologie de l'occupant du véhicule. L'invention peut également être utilisé pour la gestion des airbags de sécurité.

### Etat de la technique antérieure

Pour prérégler certains équipements de confort ou de sécurité dans un véhicule, des capteurs résistifs ou des capteurs capacitifs sont montés sur le siège du véhicule. Ces capteurs permettent de déterminer la morphologie de l'occupant du siège. Toutefois ces capteurs peuvent être onéreux.

### Présentation de l'invention

Un but de l'invention est de proposer un procédé permettant de déterminer la masse d'une personne assise sur le siège qui soit moins couteuse que l'emploi de capteur de pression.

### Résumé de l'invention

La présente invention a pour objet un procédé de détermination de la masse d'une personne ou d'un objet positionné sur un siège de véhicule, le siège comprenant au moins un actionneur configuré pour déplacer le siège selon au moins une direction parmi une direction verticale et une direction longitudinale, le procédé comprenant :
- une transmission d'une commande de déplacement du siège selon un premier déplacement audit au moins un actionneur,
- une première détermination de valeurs de courant consommé par ledit au moins un actionneur au cours du premier déplacement du siège,
- une transmission d'une commande de déplacement du siège selon un deuxième déplacement audit au moins un actionneur, la personne ou l'objet étant positionné sur le siège lors du deuxième déplacement,
- une deuxième détermination de valeurs de du courant consommé au cours du deuxième déplacement du siège,
- un calcul d'un rapport entre une première donnée représentative des valeurs de courant déterminées lors du premier déplacement, et une deuxième donnée représentative des valeurs de courant déterminées lors du deuxième déplacement,
- une détermination de la masse de l'occupant ou de l'objet à partir du rapport calculé et d'une cartographie prédéfinie.

Les caractéristiques exposées dans les paragraphes suivants peuvent, optionnellement, être mises en œuvre. Elles peuvent être mises en œuvre indépendamment les unes des autres ou en combinaison les unes avec les autres :
- Lors du premier déplacement, le siège n'est pas occupé par une personne ou un objet.
- Lors du premier déplacement, le siège est occupé par une personne ou un objet.
- Le premier déplacement est réalisé selon une direction et le deuxième déplacement est réalisé selon une direction opposée à la direction suivie lors du premier déplacement.
- Le premier déplacement et le deuxième déplacement sont mis en œuvre selon la même direction.
- Le premier et le deuxième déplacement sont dirigés selon au moins une direction verticale.
- Lors d'au moins un déplacement parmi le premier déplacement et le deuxième déplacement, le siège est déplacé d'une course comprise entre 2 millimètres et 2 centimètres, ladite course étant mesurée selon une unique direction parmi la direction verticale et la direction longitudinale.

Le procédé comporte une détermination de la durée du premier déplacement et dans lequel la première donnée est obtenue en intégrant les valeurs d'intensité déterminées au cours du premier déplacement sur la durée du premier déplacement.
- Le procédé comporte une détermination de la durée du deuxième déplacement et dans lequel la deuxième donnée est obtenue en intégrant les valeurs d'intensité déterminées au cours du deuxième déplacement sur la durée du deuxième déplacement.
- Le procédé comporte une étape préliminaire d'établissement de la cartographie à partir de mesures expérimentales effectuées sur le siège.

Le procédé comporte une détection de l'ouverture d'un ouvrant du véhicule, et dans lequel la transmission d'une commande d'un premier déplacement du siège est déclenché par la détection de cette ouverture d'un ouvrant.
- Le procédé comporte une détection d'un changement de personne assise sur le siège, et dans lequel la transmission d'une commande d'un premier déplacement du siège est déclenché par la détection de ce changement de personne.

### Brève description des figures

[Fig. 1] est une représentation schématique d'un système de détermination et d'un siège utilisé pour mettre en œuvre le procédé selon l'invention ;
[Fig. 2] est un exemple de cartographie ;
[Fig. 3] est un diagramme représentant les étapes du procédé de détermination selon un premier mode de réalisation de l'invention ;
[Fig. 4] est un diagramme représentant les étapes du procédé de détermination selon un deuxième mode de réalisation de l'invention.

### Description détaillée de l'invention

Dans la description qui suit, les indications de positionnement dans l'espace telles que haut, bas, supérieur, inférieur, horizontal, vertical etc. sont à interpréter en fonction de la position d'utilisation usuelle du siège.

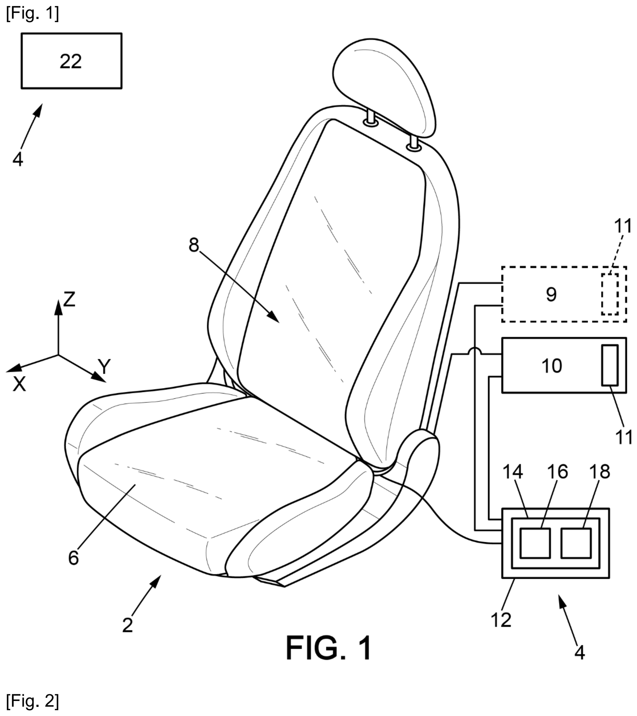

Le siège est défini par rapport à un repère orthogonal illustré sur la figure 1. Par direction longitudinale X, on entend une direction horizontale s'étendant entre l'avant et l'arrière du siège de véhicule. Par direction transversale Y, on entend une direction horizontale, s'étendant depuis un côté du siège de véhicule vers l'autre côté du siège. Par direction verticale Z, on entend la direction perpendiculaire aux directions longitudinale X et transversale Y.

Le procédé de détermination de la masse d'une personne ou d'un objet positionné sur un siège de véhicule peut être mis en œuvre par un siège 2 et un système de détermination 4 tels que ceux illustrés sur la figure 1.

Le siège 2 est un siège de véhicule, en particulier un siège de véhicule automobile. Le siège 2 comporte une assise 6 et un dossier 8 articulé à l'assise. L'assise est montée sur deux glissières ici non représentées et s'étendant selon une direction longitudinale X.

Le siège 2 comporte au moins actionneur 10 représenté schématiquement sur la figure 1.

Selon un mode de réalisation préféré, l'actionneur 10 est configuré pour relever ou d'abaisser le siège. L'actionneur est accouplé à un réducteur non représenté. Le mouvement de relevage ou d'abaissement du siège est réalisé selon une direction verticale Z. Il est généralement mais non obligatoirement accompagné par un mouvement selon la direction longitudinale X.

Le siège peut également comporter un actionneur supplémentaire 9 configuré pour déplacer le siège 2 selon la direction longitudinale X. Lorsque cet actionneur supplémentaire est utilisé, la détermination de la masse peut être légèrement faussée lorsque le véhicule est situé sur une pente. L'actionnaire supplémentaire 9 a été représenté en pointillés sur la figure 1.

L'actionneur 10 est piloté par une carte électronique 11 propre à fournir à une fréquence définie l'intensité du courant consommé par l'actionneur. La carte électronique fournit également la durée de chaque déplacement et éventuellement la tension entre la masse et la tension à la sortie de l'actionneur.

En variante, la tension en sortie de l'actionneur est négligée pour l'établissement du rapport comme décrit ci-après car elle varie peu.

En variante, si l'actionneur n'est pas piloté par une carte électronique, l'actionneur comprend un dispositif propre à mesurer la durée de chaque déplacement, l'intensité du courant consommé par l'actionneur à une fréquence définie et éventuellement un dispositif de mesure de la tension entre la masse et la sortie de l'actionneur. L'actionneur supplémentaire 9 comprend également une carte électronique 11.

Le système de détermination 4 comprend un processeur 12, par exemple un contrôleur, un microcontrôleur, un dispositif programmable ou un circuit intégré spécifique (ASIC). Le processeur 12 est connecté à la carte électronique 11 de l'actionneur 10 et à la carte électronique 11 de l'actionneur supplémentaire 9 lorsqu'il est présent. Le processeur 12 comprend une mémoire 14 qui stocke une cartographie 16 préétablie et un code exécutable 18 permettant de mettre en œuvre le procédé de détermination décrit ci-dessous à partir de valeurs d'intensité du courant consommé par l'actionneur et éventuellement d'au moins valeur de tension en sortie de l'actionneur.

La mémoire 14 comprend une mémoire vive, notée RAM et une mémoire morte notée ROM.

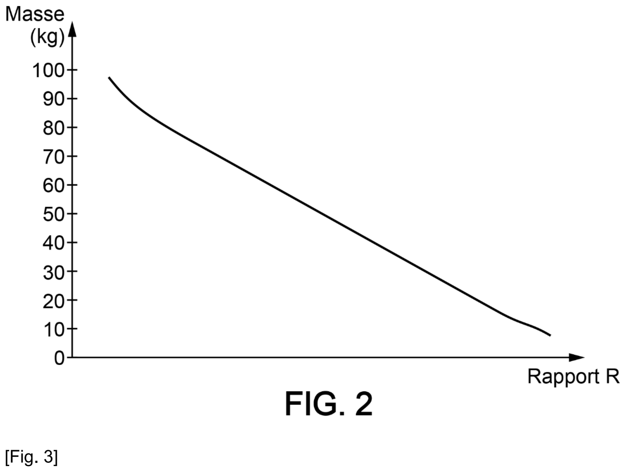

Un exemple de cartographie 16 a été illustré sur la figure 2. La cartographie 16 permet de déterminer la masse d'une personne assise sur le siège ou d'un objet posé sur le siège en fonction de rapports pré- établis.

L'objet peut être un siège enfant ou tout autre objet tel qu'un carton, des sacs etc. Le rapport est par exemple le rapport entre l'énergie consommée par l'actionneur lors d'un premier déplacement du siège, et l'énergie consommée par l'actionneur lors d'un deuxième déplacement du siège.

Le système de détermination 4 comporte une unité de détection 22 de la présence d'une personne ou d'un objet. Cette unité de détection 22 peut être une caméra fixée sensiblement au droit du siège par exemple derrière le rétroviseur ou sur le montant latéral du véhicule, un capteur infra-rouge, un capteur de présence de type résistif ou capacitif agencé sur le siège ou tout autre type de capteur ou un dispositif permettant de détecter une résistance plus importante lors du déclenchement du déplacement du siège.

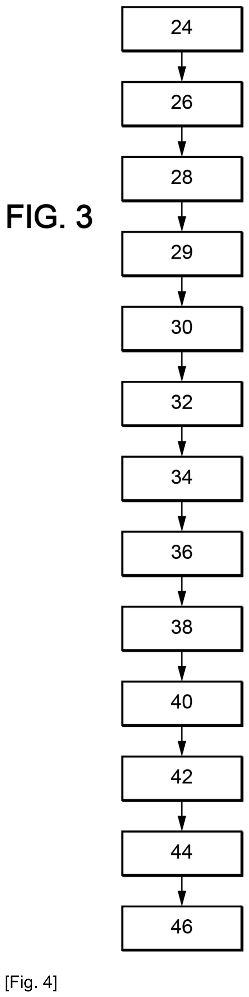

En référence à la figure 3, le procédé de détermination de la masse d'une personne ou d'un objet selon un premier mode de réalisation débute par une étape préliminaire 24 d'établissement de la cartographie à partir de mesures expérimentales. Cette étape préliminaire est généralement réalisée par le constructeur du siège pour chaque type de siège.

Les sièges d'un même type sont construits avec les mêmes éléments techniques tels que la même armature, la même mousse ou le même enchevêtrement, le même revêtement, le même actionneur, le même réducteur, les mêmes glissières et la même chaine de transmission du mouvement. Lorsqu'un de ces éléments est différent, une nouvelle cartographie doit être établie.

Au cours de cette étape préliminaire 24, l'actionneur 10 commande un premier déplacement du siège. Ce premier déplacement est réalisé sur une première course définie. Au cours de ce premier déplacement, le siège n'est pas occupé par des personnes ou des objets. Des valeurs d'intensité de courant consommé par l'actionneur sont déterminées à une fréquence définie, lors de ce premier déplacement du siège. La durée du déplacement et éventuellement a tension en sortie de l'actionneur sont également déterminées. Ces données sont fournies au processeur 12 par exemple par la carte électronique 11.

L'énergie consommée par l'actionneur lors du premier déplacement est calculée en intégrant les intensités déterminées sur la durée du premier déplacement.

Puis l'actionneur commande plusieurs deuxièmes déplacements du siège. Les deuxièmes déplacements sont mis en œuvre sur une deuxième course définie. Au cours de chaque deuxième déplacement, le siège est occupé par une personne ou une chose ayant une masse différente et connue. Ainsi, par exemple, des deuxièmes déplacements du siège sont réalisés avec des personnes (y compris des enfants) ayant des masses comprises entre 20 kilogrammes et 200 kilogrammes. De préférence, des personnes ayant des écarts de masse d'environ 5 kilogrammes occupe le siège à chaque deuxième déplacement.

Des valeurs d'intensité du courant consommé par l'actionneur sont déterminés à la fréquence définie, lors de chaque deuxième déplacement du siège. Les deuxièmes déplacements du siège sont tous mis en œuvre sur une même deuxième course (longueur et /ou hauteur) définie.

La durée du déplacement et éventuellement a tension en sortie de l'actionneur sont également déterminées. Ces données sont fournies au processeur 12 par exemple par la carte électronique 11.

Pour chaque deuxième déplacement réalisé avec une personne ou un objet ayant une masse différente, l'énergie consommée par l'actionneur lors de chaque deuxième déplacement est déterminée par en intégrant les intensités déterminées sur la durée de chaque deuxième déplacement. On obtient ainsi un nombre N d'énergie consommée par l'actionneur 10 pour les N deuxièmes déplacements effectués avec N personnes ayant chacun une masse différente.

Puis, un rapport R entre l'énergie consommée par l'actionneur lors du premier déplacement et l'énergie consommée par l'actionneur lors d'un deuxième déplacement est calculés pour les N deuxièmes déplacements. On obtient ainsi N rapports R ayant le même numérateur et des dénominateurs différents.

La cartographie 16 est établie de manière à représenter les masses des N occupants du siège en fonction des N rapports R calculés.

Des deuxièmes déplacements du siège sont également réalisés lorsque le siège porte des objets ayant des masses différentes. En particulier, des deuxièmes déplacements sont réalisées avec différents types de sièges enfants tel siège pour nourrisson, siège pour enfant de moins de 18 kilogrammes ou de plus de 18 kilogrammes, siège de différentes marques et ayant des masses différentes. Pour chaque deuxième déplacement réalisé avec un objet ayant une masse différente, l'énergie consommée par l'actionneur lors du deuxième déplacement est déterminée.

Les rapports R entre l'énergie consommée par l'actionneur lors du premier déplacement et l'énergie consommée par l'actionneur lors d'un deuxième déplacement sont calculés pour l'ensemble des deuxièmes déplacements avec objets différents. Selon ce mode de réalisation, la même cartographie 16 représente des masses d'occupants et d'objets en fonction de rapport. En variante, une première cartographie est établie pour les personnes et une deuxième cartographie différente de la première cartographie, est établie de manière à représenter la variation de la masse de l'objet posé sur le siège en fonction de la variation des valeurs des rapports calculés. Dans ce cas, une caméra permet de définir si un objet ou une personne est disposé(e) sur le siège.

En variante, l'énergie consommée au cours de chaque déplacement est calculée à partir des valeurs d'intensité déterminées au cours des déplacements, de la durée de chaque déplacement et de la tension en sortie de l'actionneur. Selon cette variante, une ou plusieurs tensions entre la masse et la sortie de l'actionneur ont été déterminées au cours de chaque déplacement, dans les mêmes conditions.

De préférence, le premier déplacement et le deuxième déplacement sont réalisés par l'actionneur de rehausse 10 qui permet d'élever ou d'abaisser le siège. Ce mouvement d'élévation ou d'abaissement est généralement accompagné d'un mouvement du siège selon la direction longitudinale X.

En variante, le premier déplacement et le deuxième déplacement du siège est un déplacement uniquement selon la direction longitudinale X.

Au cours du premier déplacement et/ou du deuxième déplacement, le siège est déplacé d'une course -c'est-à-dire d'une hauteur ou d'une longueur selon la direction longitudinale - comprise entre 2 millimètres et 2 centimètres.

Cette course est mesurée selon une unique direction parmi la direction verticale et la direction longitudinale. Ainsi, lorsque le premier actionneur 10 déplace le siège selon une direction longitudinale et une direction verticale, la longueur de la course ne sera considérée que dans la direction verticale.

La course du premier déplacement et la course du deuxième déplacement peuvent être de même longueur ou de longueur différentes.

Le premier déplacement est réalisé selon une direction et le deuxième déplacement est réalisé selon une direction opposée à la direction suivie lors du premier déplacement.

En variante, le premier déplacement et le deuxième déplacement sont mis en œuvre selon la même direction.

Lorsque la cartographie 16 a été établie, elle est stockée dans la mémoire 14 du processeur 12.

Les étapes suivantes sont réalisées par l'utilisateur du siège.

Au cours d'une étape 26, une commande de détermination de la masse d'une personne ou d'un objet est réceptionnée par le processeur 12. Cette commande peut être déclenchée par un utilisateur.

En variante, cette commande peut être provoquée par une détection de l'ouverture d'un ouvrant du véhicule.

En variante, cette commande peut être provoquée par une détection d'un changement de personne assise sur le siège, par exemple à l'aide d'une caméra. Sur réception de cette commande, le processeur 12 transmet une commande de déplacement à l'actionneur au cours d'une étape 28.

Au cours d'une étape 29, le siège est déplacé selon un premier déplacement. Ce premier déplacement est réalisé alors que le siège est vide. Dit autrement, le siège n'est pas occupé par une personne ou un objet.

Le premier déplacement du siège est réalisé avec le même actionneur, selon la même direction et sur la même course que la course du premier déplacement réalisé lors de l'établissement de la cartographie 16.

Au cours de ce premier déplacement, au cours d'une étape 30, des valeurs d'intensité du courant consommé par l'actionneur sont déterminées à une fréquence définie pendant toute la durée du déplacement. La durée du premier déplacement est également déterminée. Ces données sont fournies au processeur 12 par exemple par la carte électronique 11. La tension entre la masse et la sortie de l'actionneur peuvent éventuellement être déterminée.

Au cours d'une étape 32, l'énergie consommée par l'actionneur au cours du premier déplacement est calculée par le processeur 12 par exemple en intégrant les valeurs d'intensité sur la durée du premier déplacement.

Au cours d'une étape 34, l'unité de détection 22 détecte la présence d'une personne assise sur le siège ou d'un objet posé sur l'assise et transmet un signal de détection au processeur 12.

Sur réception du signale de détection, le processeur 12 transmet une commande de déplacement à l'actionneur, au cours d'une étape 36, afin de déplacer le siège 2 selon un deuxième déplacement. Ce deuxième déplacement est réalisé alors que le siège est occupé par une personne assise sur le siège ou qu'un objet est disposé sur le siège.

Le deuxième déplacement est réalisé avec le même actionneur, selon la même direction et sur la même course que la course du deuxième déplacement réalisé lors de l'établissement de la cartographie 16.

Au cours de ce deuxième déplacement, au cours d'une étape 38, des valeurs d'intensité du courant consommé par l'actionneur sont déterminées à une fréquence prédéfinie et pendant toute la durée du premier déplacement. La durée de ce deuxième déplacement est et la tension entre la masse et la sortie de l'actionneur. Ces valeurs d'intensités, la durée du déplacement et éventuellement la tension en sortie de l'actionneur sont transmis au processeur 12.

Au cours d'une étape 40, l'énergie consommée par l'actionneur au cours du deuxième déplacement est calculée par le processeur 12 à partir des valeurs d'intensité, de la durée du deuxième déplacement et éventuellement de la tension en sotie de l'actionneur.

Au cours d'une étape 42, le processeur 12 calcule un rapport R entre l'énergie calculée au cours de l'étape 32 et l'énergie calculée au cours de l'étape 40.

Au cours d'une étape 44, la masse de l'occupant est déterminée en recherchant dans la cartographie un rapport ayant une valeur identique ou proche de la valeur du rapport R calculé au cours de l'étape 42 et en déterminant la masse correspondante. Au cours d'une étape 46, la valeur de la masse est transmise au dispositif de gestion de l'airbag et/ou à l'ordinateur de bord du véhicule (généralement appelé « ECU » pour « Electronic Control Unit » en anglais ou « PCM » pour « Powertrain Control Module » en anglais).

Dans l'exemple décrit ci-dessus, le premier et le deuxième déplacement sont effectués par le même actionneur. En variante le premier déplacement pourrait être réalisé par un premier actionneur 10 par exemple un actionneur configuré pour rehausser le siège, et le deuxième déplacement pourrait être réalisé par un deuxième actionneur, par exemple un actionneur configuré pour déplacer le siège selon la direction longitudinale. Le deuxième actionneur n'a pas été représenté sur la figure 1. La seule contrainte est que la détermination de la masse soit réalisée dans les mêmes conditions lors de l'établissement de la cartographie et lors de la détermination effective de la masse de l'occupant ou de l'objet. Les mêmes conditions signifient que les déplacements doivent être effectués par le ou les même(s) actionneur(s) et les déplacements doivent être effectués selon les mêmes directions.

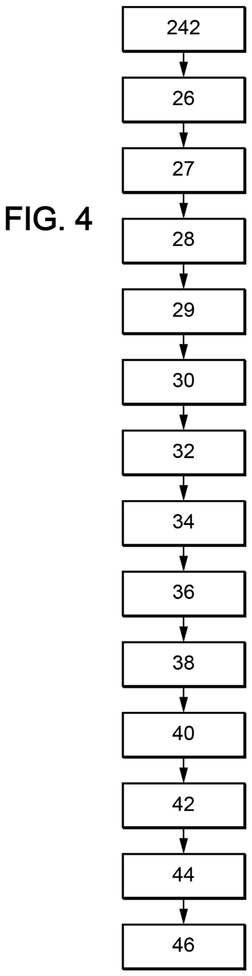

Le procédé de détermination de la masse d'une personne ou d'un objet selon un deuxième mode de réalisation a été illustré sur la figure 4. Dans ce mode de réalisation les étapes identiques ou similaires aux étapes du premier mode de réalisation sont référencées par les mêmes références et ne seront pas re-décrites en détail.

L'étape préliminaire 242 d'établissement de la cartographie 16 est similaire à l'étape 24 du procédé selon le premier mode de réalisation à l'exception du fait que :
- le premier déplacement est réalisé dans les mêmes conditions que le deuxième déplacement à savoir qu'au cours de cette étape préliminaire une personne ou un objet est assis sur le siège ;
- le deuxième déplacement est mis en œuvre avec une direction opposée au premier déplacement.

Au cours d'une étape 26, une commande de détermination de la masse d'une personne ou d'un objet est réceptionnée par le processeur 12. Cette commande peut être déclenchée par un utilisateur.

Dans ce mode de réalisation, cette commande peut être déclenchée par la détection du fait qu'une personne se soit assise sur le siège par exemple à l'aide de l'unité de détection.

Au cours d'une étape 27, l'unité de détection 22 détecte la présence d'une personne assise sur le siège ou d'un objet posé sur l'assise et transmet un signal de détection au processeur 12.

Après réception de la commande de détermination de la masse et du signal de détection, le processeur 12 transmet une commande de déplacement à l'actionneur au cours d'une étape 28.

Au cours d'une étape 29, le siège est déplacé selon un premier déplacement. Ce premier déplacement est réalisé alors que le siège occupé par une personne ou un objet. Les autres caractéristiques de l'étape 29 sont identiques à l'étape 29 selon le procédé du premier mode de réalisation.

Les étapes 30 et 32 sont identiques au procédé de détermination selon le premier mode de réalisation.

Au cours de l'étape 34, l'unité de détection 22 vérifie qu'une personne est toujours assise sur le siège ou qu'un objet est toujours posé sur l'assise et transmet un signal de détection au processeur 12.

Les étapes 36 à 46 sont identiques au procédé de détermination selon le premier mode de réalisation.

Dans ce cas, le numérateur du rapport R est égal à l'énergie calculée au cours du premier déplacement avec un occupant ou un objet sur le siège, et le dénominateur est égal à l'énergie calculée au cours du deuxième déplacement avec un occupant ou un objet sur le siège.

## Revendications

1. Procédé de détermination d'une masse d'une personne ou d'un objet positionné sur un siège (2) de véhicule, le siège (2) comprenant au moins un actionneur (10) configuré pour déplacer le siège selon au moins une direction parmi une direction verticale (Z) et une direction longitudinale (X), le procédé comprenant :
- une transmission (28) d'une commande de déplacement du siège selon un premier déplacement audit au moins un actionneur (10),
- une première détermination (30) de valeurs du courant consommé par ledit au moins un actionneur (10) au cours du premier déplacement du siège,
- une transmission (36) d'une commande de déplacement du siège selon un deuxième déplacement audit au moins un actionneur (10), la personne ou l'objet étant positionné sur le siège lors du deuxième déplacement,
- une deuxième détermination (38) de valeurs du courant consommé au cours du deuxième déplacement du siège,
- un calcul d'un rapport (42) entre une première donnée représentative des valeurs de courant déterminées lors du premier déplacement, et une deuxième donnée représentative des valeurs de courant déterminées lors du deuxième déplacement,
- une détermination (44) de la masse de l'occupant ou de l'objet à partir du rapport calculé et d'une cartographie (16) prédéfinie.

2. Procédé selon la revendication 1, dans lequel lors du premier déplacement, le siège (2) n'est pas occupé par une personne ou un objet.

3. Procédé selon la revendication 1, dans lequel lors du premier déplacement, le siège (2) est occupé par une personne ou un objet.

4. Procédé selon l'une quelconque des revendications 1 à 3, dans lequel le premier déplacement est réalisé selon une direction et le deuxième déplacement est réalisé selon une direction opposée à la direction suivie lors du premier déplacement.

5. Procédé selon l'une quelconque des revendications 1 et 2, dans lequel le premier déplacement et le deuxième déplacement sont mis en œuvre selon la même direction.

6. Procédé selon l'une quelconque des revendications 1 à 5, dans lequel le premier et le deuxième déplacement sont dirigés selon au moins une direction verticale (Z).

7. Procédé selon l'une quelconque des revendications 1 à 6, dans lequel lors d'au moins un déplacement parmi le premier déplacement et le deuxième déplacement, le siège (2) est déplacé d'une course comprise entre 2 millimètres et 2 centimètres, ladite course étant mesurée selon une unique direction parmi la direction verticale et la direction longitudinale.

8. Procédé selon l'une quelconque des revendications 1 à 7, qui comporte une détermination de la durée du premier déplacement et dans lequel la première donnée est obtenue en intégrant les valeurs d'intensité déterminées au cours du premier déplacement sur la durée du premier déplacement.

9. Procédé selon l'une quelconque des revendications 1 à 8, qui comporte une détermination de la durée du deuxième déplacement et dans lequel la deuxième donnée est obtenue en intégrant les valeurs d'intensité déterminées au cours du deuxième déplacement sur la durée du deuxième déplacement.

10. Procédé selon l'une quelconque des revendications 1 à 9, qui comporte une étape préliminaire (24, 241, 242) d'établissement de la cartographie (16) à partir de mesures expérimentales effectuées sur le siège (2).

11. Procédé selon l'une quelconque des revendications 1 à 10, qui comporte une détection de l'ouverture d'un ouvrant du véhicule, et dans lequel la transmission (28) d'une commande d'un premier déplacement du siège est déclenché par la détection de cette ouverture d'un ouvrant.

12. Procédé selon l'une quelconque des revendications 1 à 11, qui comporte une détection d'un changement de personne assise sur le siège, et dans lequel la transmission (28) d'une commande d'un premier déplacement du siège est déclenché par la détection de ce changement de personne.
